# EUROPÄISCHE PATENTSCHRIFT

(11) **EP 2 212 223 B1**
(45) Veröffentlichungstag und Bekanntmachung des Hinweises auf die Patenterteilung: **11.07.2012**
(21) Anmeldenummer: 08846787.3
(22) Anmeldetag: 04.11.2008
(51) Int. Cl.: B65G 21/20

(54) **GELÄNDERFÜHRUNG**
RAILING GUIDE
SYSTÈME DE GUIDAGE LATÉRAL

(30) Priorität: 06.11.2007 DE 102007052733
(43) Veröffentlichungstag der Anmeldung: 04.08.2010
(60) Teilanmeldung: 11167217.6
(73) Patentinhaber: KRONES Aktiengesellschaft, 93073 Neutraubling (DE)
(72) Erfinder: KÄS, Roland, 93098 Moosham (DE); WOLLNY, Thomeas, 93080 Niedergebraching (DE); LEHNER, Thomas, 93102 Geisling (DE); WAGNER, Robert, 92542 Dieterskirchen (DE)
(74) Vertreter: Hannke, Christian
(86) Internationale Anmeldenummer: PCT/EP2008/064899
(87) Internationale Veröffentlichungsnummer: WO 2009/059953

(56) Entgegenhaltungen:
- EP-A- 1 905 708
- EP-A- 1 961 680
- JP-A- 7 300 217
- US-A- 6 053 654
- US-A1- 2005 011 728

## Beschreibung

Die vorliegende Erfindung bezieht sich auf eine Führungsanordnung und genauer gesagt ein Führungsgeländer zum Führen von bewegten Gebinden. Im Bereich der Getränke herstellenden Industrie werden an vielen Stellen Transportbänder eingesetzt, die beispielsweise Gebinde oder auch Getränkekisten oder Kartons und dergleichen transportieren. Um die Seitenführung an diesen Transportbändern zu gewährleisten, sind Führungsbanden oder Führungsgeländer vorgesehen, entlang derer die jeweiligen Gebinde transportiert werden. Abhängig von den jeweiligen Gebinden werden dabei unterschiedliche Geländer verwendet, beispielsweise Metallprofile, Kunststoffprofile, Profile mit Rollenkörpern und dergleichen. Diese verschiedenen Geländer sind dabei jeweils unterschiedlich gestaltet.

Aus dem Stand der Technik ist eine Vielzahl unterschiedlicher Geländerführungen bekannt. Die US 3,325,131 beschreibt eine Vorrichtung zum Montieren von Geländern. Dabei wird ein Geländer mit halbkreisförmigem Querschnitt in eine Führungseinrichtung eingeschoben. Aus der DE 101 18 566 A1 ist eine Haltevorrichtung für eine Seitenführung eines Stetigförderers bekannt. Dabei wird von der Haltevorrichtung eine Seitenführung gehalten, welche sich aus mehreren geraden Wandabschnitten zusammensetzt.

Die DE 296 10 201 U1 beschreibt ein Geländer für einen Behälterförderer. Dabei ist eine Halteklammer vorgesehen, welche das Geländer hält. Aus der US 6,105,757 ist ein Führungssystem bekannt. Dieses weist eine Halteklammer auf, in dem ein Führungsgeländer mit geraden Seitenflächen gehalten wird.

Die DE 91 05 736 U1 beschreibt ein Verschleißprofil für Führungsgeländer in Gefäßfördereinrichtungen. Auch hier ist eine Klammer vorgesehen, welche ein Führungselement klammert, wobei dieses Führungselement selbst die eigentliche Führungseinrichtung des Geländers bildet. Aus der DE 27 13 223 ist ebenfalls eine Geländerführung bekannt. Dabei wird das eigentliche Geländer in eine Führungsklammer eingeführt.

Die DE 24 39 804 A1 beschreibt ein Führungsgeländer für Behälterförderer. Dabei wird ein Führungselement zentral bzw. mittig von einem Haltearm getragen.

Die US 6 053 654 A1 offenbart eine Führungsanordnung und eine Halteeinrichtung gemäß dem Oberbegriffen der Ansprüche 1 und 9.

Der vorliegenden Erfindung liegt die Aufgabe zugrunde, eine Führungsanordnung zu schaffen, welche vielseitig, das hießt für unterschiedliche Gebindearten eingesetzt werden kann. Dabei soll es möglich sein, jeweils mit gleichen Basiselementen auszukommen und lediglich einzelne Bestandteile der Führungsanordnung anzupassen. Weithin sollte es bevorzugt auch möglich sein, mehrere Führungselemente durch eine Halterung zu halten. Dies wird erfindungsgemäß durch eine Führungsanordnung nach Anspruch 1 und eine Halteeinrichtung zum Halten eines Führungselements nach Anspruch 9 erreicht. Vorteilhafte Ausführungsformen und Weiterbildungen sind Gegenstand der Unteransprüche. Es wird jedoch darauf hingewiesen, dass nicht alle Aufgaben zwangsweise durch die Gegenstände aller Unteransprüche erreicht werden.

Eine erfindungsgemäße Führungsanordnung zum Führen von bewegten Gebinden weist wenigstens ein Führungselement und insbesondere ein Seitenführungselement auf, welches sich in einer vorgegebenen Erstreckungsrichtung wenigstens abschnittsweise entlang des Transportpfades der Gebinde erstreckt sowie wenigstens eine Halteeinrichtung, welche das Führungselement an einer vorbestimmten Position gegenüber dem Transportpfad hält. Erfindungsgemäß weist die Halteeinrichtung ein Klammerelement auf, welches das Führungselement klammert, wobei das Klammerelement in einer senkrecht zu der Erstreckungsrichtung stehenden Richtung an dem Führungselement anliegt und das Führungselement in seinem Querschnitt zwei Halteabschnitte sowie einen zwischen diesen Halteabschnitten und einteilig mit diesen Halteabschnitten ausgebildeten Wandabschnitt aufweist und wobei die Halteabschnitte wenigstens um 90° gekrümmt sind und ein Außenumfang der Halteabschnitte mit dem Klammerelement wenigstens abschnittsweise in Berührung steht und das Führungselement eine durch den Wandabschnitt und die Halteabschnitte gebildete Ausnehmung aufweist, in der eine weitere Führungseinrichtung aufnehmbar ist, und wobei die Halteeinrichtung einen Träger aufweist, an dem das Klammerelement lösbar und fest angeordnet ist, und wobei ein erstes Eingriffsmittel des Trägers mit einem zweiten Eingriffsmitel wenigstens eines der Klammerteile des Klammerelementes zusammenwirkt.

Unter dem Transportpfad der Gebinde wird derjenige Pfad verstanden, entlang dessen die Gebinde gefördert werden. Unter einem Klammerelement wird ein Element verstanden, welches ein anderes Element von zwei Seiten und bevorzugt von zwei sich gegenüberliegenden Seiten kontaktiert und so bevorzugt einklammert. Bei der zu der Erstreckungsrichtung senkrecht stehenden Richtung handelt es sich bevorzugt um eine Richtung, welche nicht nur zu der Erstreckungsrichtung senkrecht steht sondern auch zu der Ebene eines Transportbandes. Unter einem Anliegen in dieser senkrechten Richtung wird insbesondere verstanden, dass das Klammerelement von oben und unten an dem Führungselement anliegt und damit in der von oben nach unten weisenden Richtung.

Unter dem Querschnitt des Führungselementes wird ein Querschnitt in einer Querschnittsebene verstanden, welche senkrecht zu der Erstreckungsrichtung steht. Die Halteabschnitte dienen dabei zum Halten einer weiteren Führungseinrichtung und der dazwischen liegende Wandabschnitt verläuft bevorzugt geradlinig. Die Krümmung um wenigstens 90° kann dabei eine preis- bzw. kreisbogengeformte ausgebildete Krümmung sein, es wäre jedoch auch eine andersartige, beispielsweise elliptische, Krümmung um 90° möglich oder auch eine Krümmung, die sich aus mehreren gegeneinander abgewinkelten geraden Abschnitten zusammensetzt.

Diese Halteabschnitte des Führungselementes stehen mit dem Klammerelement abschnittsweise in Berührung, das heißt der Halt des Führungselements gegenüber dem Klammerelement erfolgt zumindest auch über einen Halt zwischen dem Klammerelement und den besagten Halteabschnitten. In die besagte Ausnehmung, die durch den Wandabschnitt und die Halteabschnitte gebildet wird, kann insbesondere eine weitere Führungseinrichtung wie beispielsweise ein Kunststoffkörper eingeführt werden.

Bei einer weiteren vorteilhaften Ausführungsform steht wenigstens ein Halteabschnitt symmetrisch bezüglich einer zu dem Wandabschnitt parallelen Ebene. Vorzugsweise sind beide Halteabschnitte symmetrisch bezüglich der zu dem Wandabschnitt parallelen Ebene gebildet. Durch diese symmetrische Ausführung der Krümmung kann erreicht bzw. gefördert werden, dass das Führungselement sowohl derart in das Klammerelement eingeführt werden kann, dass die Ausnehmung nach außen, das heißt in Richtung der zu fördernden Gebinde ragt, als auch derart, dass die Ausnehmung nach innen, das heißt weg von den Gebinden ragt. Auf diese Weise kann der Wandabschnitt selbst einerseits als Führungskörper verwendet werden und andererseits in umgedrehter Stellung eine in die Ausnehmung eingesetzte Führungseinrichtung.

Eine derartige Vorgehensweise ist beispielsweise bei einigen der im Stand der Technik bekannten Vorrichtungen nicht möglich, da dort das Führungselement nur in einer Richtung in das Klammerelement eingesetzt werden kann. Vorzugsweise weisen die Halteabschnitte eine Krümmung von mehr als 100°, bevorzugt von mehr als 120°, bevorzugt von mehr als 140° und besonders bevorzugt in einem Bereich von 160° - 180° auf, wobei jedoch vorzugsweise die Krümmung auch nicht höher ist als 180°. Bei einer besonders bevorzugten Ausführungsform weisen die beiden Halteabschnitte ein halbkreisförmiges Profil auf und werden von einem geradlinig verlaufenden Wandabschnitt miteinander verbunden.

Bei einer weiteren vorteilhaften Ausführungsform weist das Klammerelement ein C-förmiges Profil auf. Auch das Führungselement weist bei einer bevorzugten Ausführungsform ein C-förmiges Profil auf, wobei jedoch, wie gesagt, der Wandabschnitt des Führungselements bevorzugt geradlinig ausgeführt ist.

Bei einer weiteren vorteilhaften Ausführungsform klammert das Klammerelement das Führungselement mittels zweier sich gegenüberliegender Befestigungsabschnitte, wobei diese Befestigungsabschnitte um einen geringeren Winkel gekrümmt sind als die Halteabschnitte des Führungselements. Durch diese geringere und maximal gleichgroße Krümmung wird erreicht, dass das Führungselement bequem in den Halteabschnitten aufgenommen werden kann. Genauer gesagt kann das Führungselement sowohl in seiner Längsrichtung in das Klammerelement eingeschoben werden als auch nach vorherigen geringfügigen Lösen des Klammerelements von vorne. Bevorzugt ist ein Außenprofil des Führungselements an ein Innenprofil des Klammerelements angepasst. Dies bedeutet, dass sowohl die Halteabschnitte des Führungselements als auch die Befestigungsabschnitte eine sich entsprechende Kontur aufweisen, beispielsweise beide einen kreissegmentförmigen Querschnitt.

Bei einer weiteren bevorzugten Ausführungsform ist eine Breite des Außenumfangs des Führungselementes größer als eine Breite des Innenumfangs des Klammerelements. Dies bedeutet, dass das Führungselement unabhängig von seiner Anordnung in dem Klammerelement immer gegenüber der Halteeinrichtung bzw. dem Klammerelement hervorsteht. Auf diese Weise wird verhindert, dass Gebinde während des Transports direkt an das Klammerelement stoßen.

Vorzugsweise ist in der Ausnehmung des Führungselements eine weitere Führungseinrichtung angeordnet. Besonders bevorzugt handelt es sich dabei um eine Führungseinrichtung die aus Kunststoff hergestellt ist. Dabei ist diese Führungseinrichtung derart gestaltet, dass sie gegenüber dem Führungselement nach außen, das heißt in Richtung der Gebinde, herausragt. Auf diese Weise wird erreicht, dass die Gebinde während des Transports in diesem Falle nicht an dem Führungselement sondern lediglich an der Führungseinrichtung anstoßen.

Bei einer weiteren vorteilhaften Ausführungsform weist die weitere Führungseinrichtung eine Vielzahl von drehbaren Körpern auf. Wie oben erwähnt, soll die erfindungsgemäße Führungsanordnung bei entsprechender Bestückung für eine Vielzahl von unterschiedlichen Gebinden geeignet sein. Falls, wie hier, die Führungseinrichtung eine Vielzahl von drehbaren Körpern, beispielsweise in Form von Kunststoffröllchen, aufweist, ist sie besonders bevorzugt beispielsweise für sog. Einwegshrinkpacks geeignet. Anstelle drehbarer Kunststoffröllchen können auch Kunststoffkugeln als drehbare Körper vorgesehen sein. Falls, wie oben erwähnt, die Führungseinrichtung ein Kunststoffprofil ist, ist sie beispielsweise für Einweg- und Mehrwegkartons geeignet. Eine Verwendung des Führungselements alleine, beispielsweise durch Umdrehen des Führungselements gegenüber dem Klammerelement, kann für Gebinde in Form von Flaschenkästen geeignet sein.

Die vorliegende Erfindung bezieht sich weiterhin auf eine Halteeinrichtung zum Halten eines Führungselements zum Führen von bewegten Gebinden. Dabei weist die Halteeinrichtung ein Klammerelement zum Halten des Führungselements sowie einen Träger, an dem dieses Klammerelement angeordnet ist, auf. Erfindungsgemäß weist das Klammerelement einen ersten Klammerteil und einen zweiten mit diesem ersten Klammerteil zum Halten des Führungselements zusammenwirkenden Klammerteil auf sowie wenigstens ein Verbindungselement, mittels dem die beiden Klammerteile lösbar miteinander verbindbar sind, wobei die Klammerteile einen Aufnahmebereich zur Aufnahme eines Endabschnitts des Trägers dergestalt aufweisen, dass der Endabschnitt des Trägers zwischen den Klammerteilen aufnehmbar und drehfest zwischen den beiden Klammerteilen einklemmbar ist.

Unter der Halteeinrichtung wird eine Einrichtung verstanden, welche das Führungselement an einer vorbestimmten Position gegenüber beispielsweise einem Transportband hält. Die Klammerteile dienen, wie oben erwähnt, zum Klammern des Führungselements, wobei sie das Führungselement vorzugsweise von oben und unten einklemmen. Als Verbindungselement zum Verbinden der beiden Klammerteile können beispielsweise Schrauben, Schraubenmuttern und dergleichen vorgesehen sein.

Erfindüngsgemäß sind zwei derartige Verbindungselemente vorgesehen und zwischen diesen beiden Verbindungselementen ist der Endabschnitt des Trägers im zusammengebauten Zustand angeordnet.

Durch die lösbare Anordnung ist es möglich, das Führungselement schnell auszutauschen bzw. umzudrehen. Auch ist durch diese Vorgehensweise mit einfachen Mitteln eine größere Bandbreite an unterschiedlichen Führungsanordnungen herstellbar.

Vorzugsweise ist der Träger ein stangenförmiger Körper. Bei einer weiteren vorteilhaften Ausführungsform weist der Träger ein erstes Eingriffsmittel auf, das mit einem zweiten Eingriffsmittel wenigstens eines Klammerteils zusammenwirkt. Dabei ist es möglich, dass der Träger einen Vorsprung aufweist, der in eine entsprechend angepasste Nut des Klammerteils eingreift. Umgekehrt kann jedoch auch der Träger eine Nut aufweisen, in die ein Vorsprung oder ein Umfangskragen des oder der Klammerteile eingreift.

Bei einer weiteren vorteilhaften Ausführungsform ist an einem Endabschnitt des Trägers ein Eingriffskörper mit nicht kreisförmigem Querschnitt vorgesehen. Durch diesen nicht kreisförmigen Querschnitt ist es möglich, eine bestimmte Drehstellung des Trägers gegenüber den Klammerteilen festzusetzen bzw. zu arretieren. Dabei ist bevorzugt dieser Eingriffskörper durch eine Umfangsnut von den übrigen Bereichen des Trägers beabstandet.

Bei einer weiteren bevorzugten Ausführungsform weist wenigstens ein Klammerteil und bevorzugt genau ein Klammerteil eine Öffnung auf, durch die der Abschnitt des Trägers hindurchführbar ist. Dabei ist es möglich, dass diese Öffnung derart angepasst ist, dass lediglich der Eingriffskörper durch sie hindurch treten kann, nicht jedoch ein Grundkörper des Trägers. Bei einer weiteren vorteilhaften Ausführungsform sind die beiden Klammerteile derart ausgestaltet, dass sie im zusammengebauten Zustand eine Öffnung bilden, in der der Träger gehalten wird. Vorzugsweise handelt es sich bei dieser Öffnung in dem Klammerteil um eine geschlossene Öffnung. Vorzugsweise ist durch diese Öffnung der Träger nur in einer bestimmten Drehstellung durchführbar.

Bei einer weiteren vorteilhaften Ausführungsform weist wenigstens ein Klammerteil eine Ausnehmung auf, deren geometrische Gestalt auf einen Querschnitt eines Stirnabschnitts des Trägers angepasst ist. Genauer ist diese Ausnehmung auf einen Stirnabschnitt des Eingriffskörpers angepasst. In diese Ausnehmung kann beim Zusammenbau der Eingriffskörper eingerastet werden und anschließend können die beiden Klammerelemente miteinander verschraubt werden. Die vorliegende Erfindung ist weiterhin auf eine Führungsanordnung der oben beschriebenen Art mit wenigstens einer Halteeinrichtung der oben beschriebenen Art gerichtet. Bei der erfindungsgemäßen Halterung ist es in einer bevorzugten Ausführungsform möglich, dass der Bolzen bzw. Träger durch eine Drehung in die beiden Halteeinrichtungen einrastet und auf diese Weise die Führungseinrichtung bzw. das Geländer geklemmt wird und so eine einfache Montage möglich ist. Durch die erfindungsgemäße Ausführung ist es möglich, einen einheitlichen Grundträger vorzusehen, der bevorzugt aus Edelstahl hergestellt ist. Dieser Grundträger bzw. dieses Profil ist sowohl bei einem Außengeländer als auch bei einem Mittelgeländer einsetzbar. Im Stand der Technik werden hingegen unterschiedliche Profile als Grundträger eingesetzt je nachdem, ob ein Außengeländer oder ein Mittengeländer erwünscht ist. Auch die Grundträger bzw. Führungselemente unterscheiden sich im Stand der Technik nach Außenbereich und Mittenbereich, was die Herstellung verteuert.

Wie oben erwähnt, ist die Form des Führungselements so gestaltet, dass unterschiedlichste Führungsmöglichkeiten, wie Röllchen, Kunststoffführungsschienen oder auch das Führungselement alleine zum schnellen Austausch zur Verfügung stehen.

Weitere Vorteile und Ausführungsformen ergeben sich aus den beigefügten Zeichnungen:
Darin zeigen:
   - Fig. 1a - 1d: Unterschiedliche Ausführungsformen eines Führungselementes, teilweise mit einer Führungseinrichtung;
   - Fig. 2a: Eine Seitenansicht einer Führungsanordnung mit eingesetztem Führungselement;
   - Fig. 2b: Eine Ansicht einer Führungsanordnung mit umgekehrt eingesetztem Führungselement;
   - Fig. 3a - 3c: Eine Führungsanordnung mit einer waagrechten Halterung;
   - Fig. 4a - 4c: Eine Führungsanordnung mit einer Doppelhalterung;
   - Fig. 5a - 5c: Eine Führungsanordnung mit einer vertikalen Halterung;
   - Fig. 6a: Eine Halteeinrichtung mit einem vertikalen Träger und einem einfachen Klammerelement;
   - Fig. 6b: Eine Halteeinrichtung mit einem vertikalen Träger und einem Doppel-Klammerelement;
   - Fig. 6c: Eine Halteeinrichtung mit einem horizontalen Träger und einem Klammerelement;
   - Fig. 7: Einen möglichen Aufbau für ein Geländer;
   - Fig. 8: Eine Seitenansicht für eine Halteeinrichtung mit zwei Klammerelementen.
   - Fig. 9: eine vergrößerte Darstellung einer Führungsanordnung mit eingesetztem Führungselement; und
   - Fig. 10: eine vergrößerte Darstellung einer weiteren Führungsanordnung mit eingesetztem Führungselement.

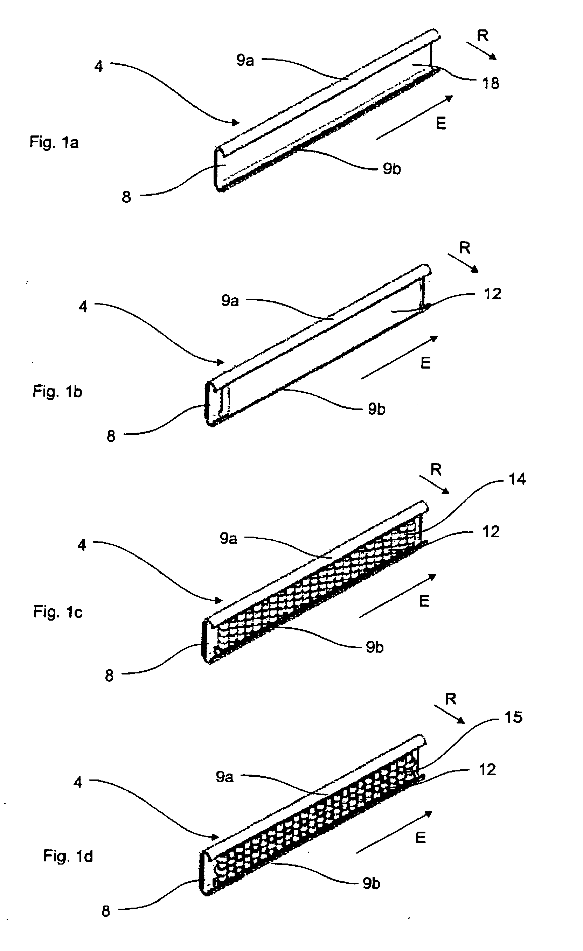

Die Figuren 1a - 1c zeigen ein Führungselement 4 in unterschiedlichen Ausführungsformen. Dabei zeigt Fig. 1a das Führungselement ohne einen Einsatz. Dieses Führungselement weist einen ersten Halteabschnitt 9a und einen diesem gegenüberliegenden zweiten Halteabschnitt 9b auf, wobei zwischen diesen beiden Halteabschnitten 9a, 9b ein Wandabschnitt 8 vorgesehen ist. Dieser Wandabschnitt verläuft dabei in einer Ebene und erstreckt sich in einer Erstreckungsrichtung E des Führungselements. Durch diesen Wandabschnitt 8 und die beiden Halteabschnitte 9a und 9b wird eine Ausnehmung 18 gebildet, in die weitere Führungseinrichtungen eingesetzt werden können.

Dieses Führungselement kann alleine verwendet werden, beispielsweise bei dem Transport von Flaschenkästen.

Die Fig. 1b zeigt das Führungselement aus Fig. 1a, wobei hier in die Ausnehmung 18 eine Führungseinrichtung 12 in Form eines Kunststoffprofils 12 eingesetzt ist. Dieses Kunststoffprofil 12 ragt dabei in der Richtung R gegenüber dem Führungselement 4 bzw. gegenüber den Halteabschnitten 9a und 9b heraus. Weiterhin ist die Führungseinrichtung 12 derart ausgebildet, dass sie zumindest teilweise die beiden Halteabschnitte 9a und 9b hintergreift.

Wie sich insbesondere aus den Fig. 1a und 1b ergibt, weisen die beiden Halteabschnitte 9a und 9b eine Krümmung auf, wobei hier eine im Wesentlichen kreisförmige Krümmung vorliegt, welche einen Winkel von ca. 180° aufweist. Das in Fig. 1b gezeigte Führungselement eignet sich insbesondere als Transportgeländer für Einweg- und Mehrwegkartons.

Fig. 1c zeigt ein Führungselement, wobei hier die Führungseinrichtung 12 eine Vielzahl von Kunststoffröllchen 14 aufweist. Auch dieser Außenumfang der Kunststoffröllchen steht gegenüber dem Führungselement 4 in der Richtung R vor. Diese Ausführungsform eignet sich insbesondere für den Transport von Einwegshrinkpacks.

Fig. 1d zeigt eine weitere Ausführungsform eines Führungselements 4a. Dabei ist hier ebenfalls ein C-förmiges Profil des Führungselements vorgesehen sowie eine Führungseinrichtung mit einer Vielzahl von Kunststoff kugeln 15. Auch dieses Führungselement eignet sich insbesondere für Einwegshrinkpacks. Man erkennt, dass jeweils an das gleiche Führungselement 4 die unterschiedlichen Führungseinrichtungen, die insbesondere in Form von Kunststoffeinsätzen ausgebildet sind, eingesetzt werden können.

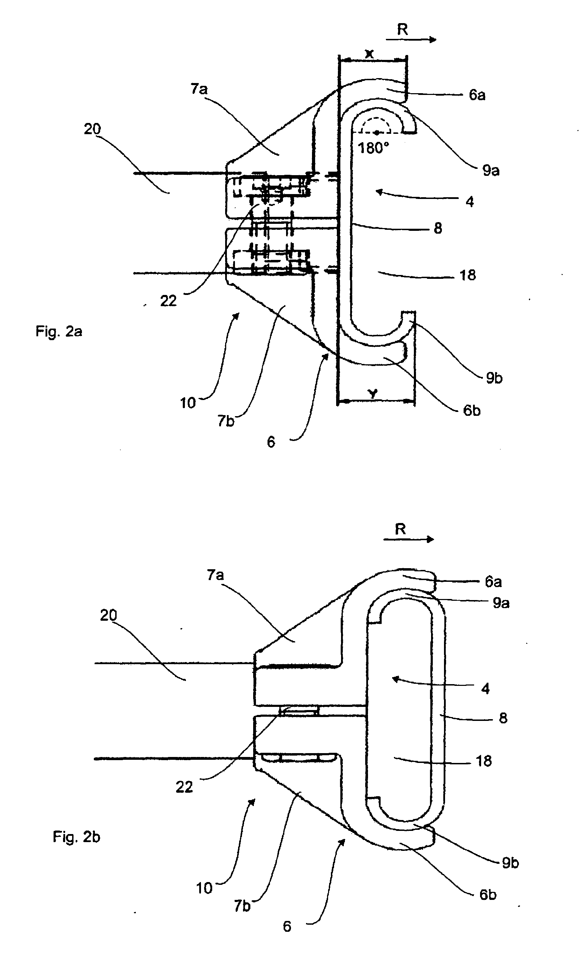

Fig. 2a zeigt eine Seitenansicht einer erfindungsgemäßen Führungsanordnung. Diese weist einen Träger 20 auf, an dem zwei Klammerteile 7a und 7b mittels einer Schraube 22 angeschraubt sind. Diese Klammerteile 7a und 7b bilden wiederum ein Klammerelement 6, genauer gesagt wird dieses Klammerelement aus zwei Klammerabschnitten 6a und 6b. gebildet. Innerhalb dieser Klammerabschnitte 6a und 6b ist das Führungselement 4 angeordnet. Man erkennt, dass der Aussenabstand Y des Halteabschnitts 9b bzw. 9a größer ist als der Innenabstand X des Klammerelements 6.

Auf diese Weise wird erreicht, dass das Führungselement stets in der Richtung R gegenüber dem Halteelement 6 hervorsteht. Auf diese Weise kann erreicht werden, dass auch ein in Fig. 2a in das Führungselement 4 eingesetztes Kunststoffprofil stets gegenüber dem Halteelement 6 hervorsteht und auf diese Weise vermieden werden kann, dass transportiertes Stückgut während des Transports direkt gegen das Klammerelement 6 stößt.

Bei der in Fig. 2a gezeigten Ausführungsform sind die beiden Halteabschnitte 9a und 9b, wie oben erwähnt, um 180° gekrümmt. Auch die Halteabschnitte 6a und 6b weisen eine Krümmung auf, wobei hier der Krümmungswinkel jedoch unter 180°, bevorzugt jedoch auch über 90° liegt. Durch einen derartigen Krümmungswinkel kann erreicht werden, dass das Führungselement 4 einerseits gehalten wird, und andererseits auch in der Richtung R gegenüber dem Halteelement 6 vorsteht.

Fig. 2b zeigt eine weitere Anordnung des Führungselements. Dabei ist erkennbar, dass hier lediglich das Führungselement 4 in der Figurenebene um 180° gedreht wurde. Auf diese Weise kann das Führungselement 4 bzw. dessen Wandabschnitt 8 unmittelbar als Geländer für Stückgut eingesetzt werden. Man erkennt aus einem Zusammenspiel der in Fig. 2a und 2b gezeigten Darstellungen, dass mit einer geringen Anzahl an Bauteilen die unterschiedlichsten Führungsgeländer realisiert werden können. Bei der in Fig. 2b gezeigten Ausführungsform spielt die Ausnehmung 18 keine Rolle, da sie nach innen gewandt ist.

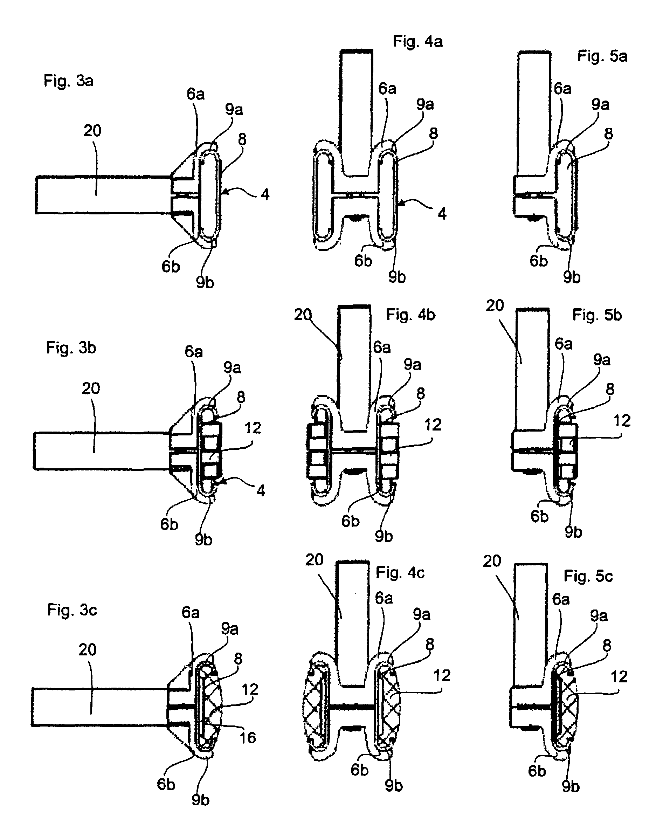

Die Fig. 3a - 3c zeigen unterschiedliche Ausführungsformen einer Halteanordnung. Dabei ist jeweils ein Träger 20 vorgesehen, an dem die Halteabschnitte 6a und 6b und auch das Führungselement mit seinen Halteabschnitten 9a und 9b angeordnet ist. Bei der in Fig. 3a gezeigten Ausführungsform ist das Führungselement ähnlich wie in Fig. 2a so gedreht, dass der Wandabschnitt 8 nach außen zeigt. Bei der in Fig. 3b gezeigten Ausführungsform ist eine Führungseinrichtung 12 mit Rollenkörpern eingesetzt. Bei der in Fig. 3c gezeigten Ausführungsform ist eine Führungseinrichtung 12 ohne Rollen eingesetzt, wobei diese Führungseinrichtung 12 Vorsprünge 14 aufweist, die an einem Innenquerschnitt der Halteabschnitte 9a und 9b angepasst sind, und mittels derer diese Führungseinrichtung 12 gehalten wird.

Weiterhin ist bei dieser Ausführungsform ein Spalt 16 zwischen der Führungseinrichtung und dem Wandabschnitt 8 vorgesehen, wobei dieser Führungsabschnitt eine gewisse Federungsmöglichkeit der Führungseinrichtung 12 gegenüber dem Führungselement 4 bewirkt.

Die Fig. 4a - 4c zeigen eine entsprechende Ausführungsform für eine Doppelhalterung. Hier ist der Träger 20 vertikal angeordnet und an dem Träger sind zwei in unterschiedliche Richtung weisende Halteabschnitte 9a bzw. 9b mit den jeweiligen Führungselementen 4 angeordnet. Diese Anordnung eignet sich insbesondere für Transportstrecken, auf denen auf beiden Seiten des Geländers Stückgut befördert wird. Auch hier sind wieder entsprechend der in den Fig. 3a - 3c gezeigten Ausführungsform unterschiedliche Anordnungen des Führungselements bzw. unterschiedliche Führungseinrichtungen denkbar.

In den Fig. 5a - 5c ist eine weitere Ausführungsform mit einem vertikal angeordneten Träger 20 jedoch nur in ein einem einseitigen Führungselement gezeigt.

Wie aus den Fig. 3a - 5c ersichtlich, wird damit jeweils ein einheitlicher Grundträger verwendet, der bevorzugt aus Edelstahl hergestellt ist. Dieses Profil kann sowohl bei einem Außengeländer als auch bei einem Mittelgeländer eingesetzt werden. Im Gegensatz hierzu werden im Stand der Technik derzeit unterschiedliche Profile als Grundträger eingesetzt.

Damit stehen durch die erfindungsgemäße Anordnung bzw. die Form der Trägereinrichtung verschiedenste Führungsmöglichkeiten wie Röllchen oder Kunststoffführungsschienen oder auch, wie oben gezeigt, das Führungselement alleine zum schnellen Austausch zur Verfügung.

Für den Aufbau einer Führungsanordnung können auch mehrere der in den Fig. 3a - 5c gezeigten Komponenten miteinander kombiniert werden, beispielsweise eine Doppelhalterung mit einer Einfachhalterung und einer Halterung mit einem horizontalen Träger. Auf diese Weise können insgesamt modulare Geländer aufgebaut werden.

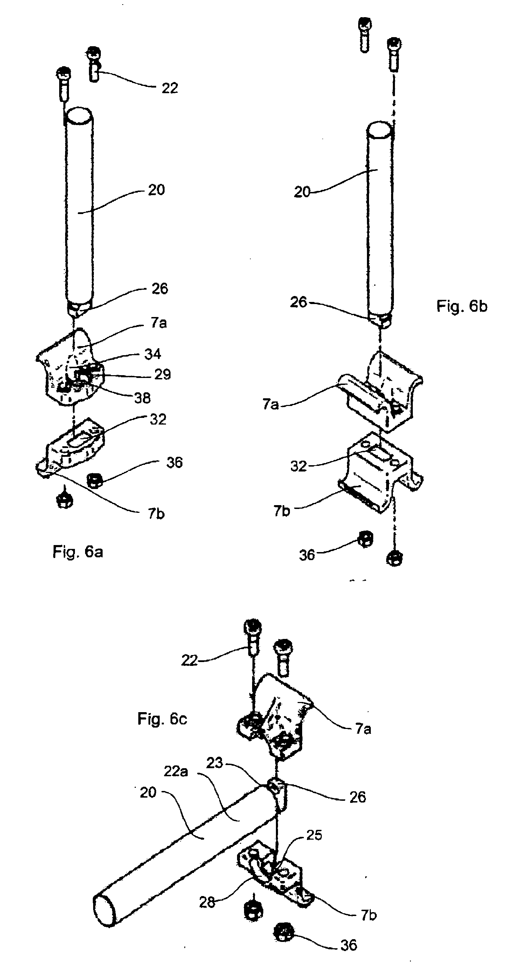

Fig. 6a stellt den Zusammenbau einer Halterung mit einem vertikal ausgerichteten Träger 20 dar. An diesem Träger 20 ist ein Vorsprung 26 vorgesehen, der einen nicht kreisförmigen Querschnitt und hier insbesondere einen rechteckigen Querschnitt aufweist. Dieser Vorsprung bzw. Bolzen kann in eine Öffnung 38 des Klammerteils 7a eingeschoben werden. Dabei ist bevorzugt ein Einschieben nur bei einer bestimmten Drehstellung möglich. Weiterhin ist eine Ausnehmung 34 vorgesehen, entlang derer der Grundkörper des Trägers 20 geführt werden kann.

Das zweite Klammerteil 7b weist eine Ausnehmung 32 auf, deren Fläche an einer Stirnfläche des Vorsprungs 26 angepasst ist. Beim Zusammenbau wird zunächst der Träger in Fig. 6a um 90° gedreht, damit er durch die entsprechend angepasste Öffnung 38 hindurchgeführt werden kann. Nach dem Hindurchführen wird der Träger wiederum um 90° gedreht, so dass der Vorsprung 26 in die Ausnehmung 32 eingreift. In diesem Zustand werden die beiden Klammerelemente 7a und 7b mit den Schrauben 22 und den Muttern 36 miteinander verschraubt und auf diese Weise wird ein stabiler Halt des Trägers gegenüber den Klammerelementen 7a und 7b bewirkt. Ein Kragen 29 verhindert, dass der Träger 20 wieder in dieser Drehstellung aus der Öffnung 38 und damit dem Klammerteil 7a heraus gelangen kann.

Fig. 6b zeigt eine weitere Anordnung, wobei hier ein Doppelhalteelement vorgesehen ist. Ähnlich wie bei der in Fig. 6a gezeigten Ausführungsform wird auch hier zunächst der Träger um 90° gedreht, um dann schließlich nach dem Durchführen durch die (hier nicht gezeigte) Öffnung mit seiner Stirnfläche in die Ausnehmung 32 einzurasten. Anschließend können wieder die beiden Klammerelemente 7a und 7b mit Schrauben 22 und Muttern 36 miteinander verschraubt werden.

Fig. 6c zeigt eine Halteanordnung, wobei hier der Träger 20 horizontal angeordnet ist. Bei dieser Ausführungsform wird der Träger in eine Ausnehmung 28 derart eingefügt, dass ein Kragen 25 in eine zwischen dem Vorsprung 26 des Trägers und dem Grundköper 20a des Trägers gebildete Nut 23 eingreift. Anschließend wird das zweite Halteelement 7a aufgesetzt und die beiden Halteelemente werden mit den Schrauben 22 und den Muttern 36 miteinander verschraubt. Auch hier ist ein stabiler Halt des Trägers gegenüber den Halteelementen 7a und 7b möglich.

Man erkennt, dass bei allen Ausführungsformen jeweils ein einheitlicher Träger 10 mit einem jeweils einheitlichen Vorsprung 26 verwendet werden kann, was insgesamt die Herstellungskosten für das Geländer verringert.

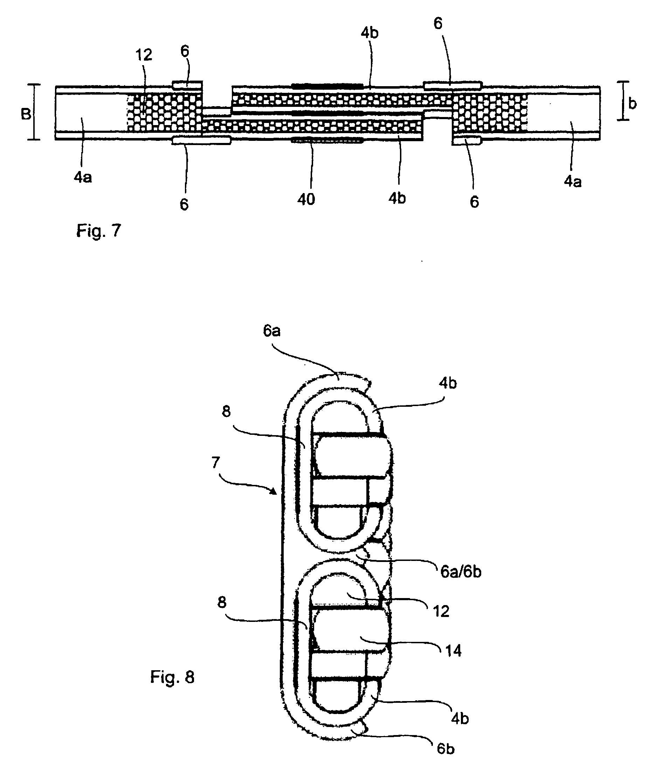

Fig. 7 zeigt eine Darstellung zur Veranschaulichung eines modularen Aufbaus für ein Geländer. Dabei sind zwei Führungselemente 4a mit einer größeren Breite B und zwei weitere Führungselemente 4b mit einer kleineren Breite b vorgesehen. Entsprechend weisen auch die Klammerelemente 6 unterschiedliche Breiten zur Aufnahme dieser Führungselemente 4a, 4b auf. Ober die beiden mittleren Führungselemente 4b mit den geringeren Breiten b und die an deren Randseiten angeordneten Klammerelemente 6 werden die beiden äußeren Führungselemente 4a mit den großen Breiten B miteinander verbunden. Gleichzeitig erkennt man, dass der Abstand, den die beiden äußeren Führungselemente zueinander aufweisen, durch eine Verschiebung der beiden inneren Führungselemente 4b mit der kleinen Breite b gegeneinander erreicht werden kann.

Das Bezugszeichen 40 bezieht sich auf die in Fig. 8 gezeigte mittlere Halterung, an der die beiden Führungselemente 4b mit der kleinen Breite b angeordnet sind. Diese mittlere Halterung 40 weist einen oberen Klammerabschnitt 6a und einen unteren Klammerabschnitt 6b auf. Zwischen diesen beiden Klammerabschnitten 6a, 6b ist ein mittlerer Steg angeordnet, der die Funktion beider Klammerabschnitte 6a, 6b wahrnimmt. Zwischen den einzelnen Halteelementen sind die beiden Führungselemente 4 angeordnet, wobei bei dieser Ausführungsform eine Verschiebung dieser beiden Führungselemente 4b gegeneinander in einer senkrecht zu der Figurenebene stehenden Richtung möglich ist.

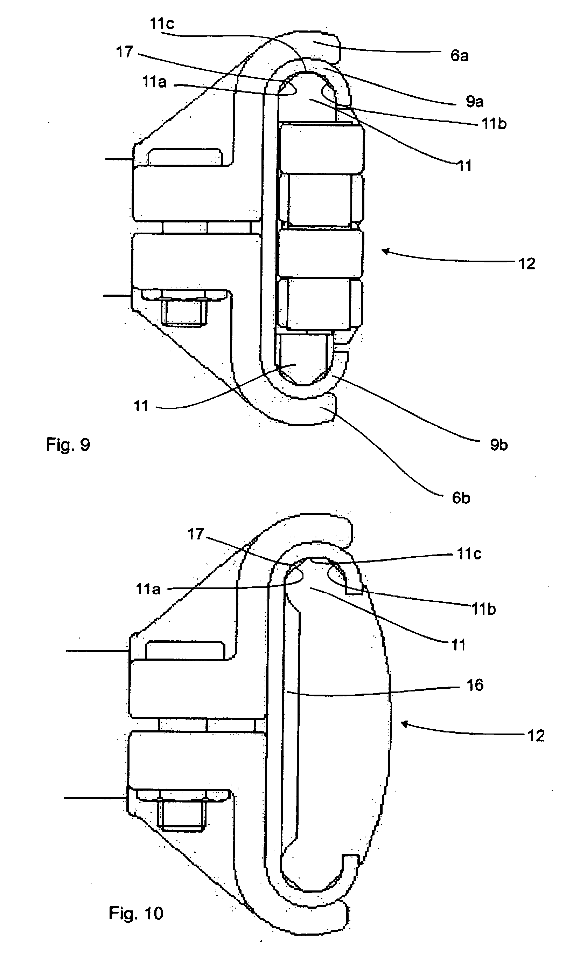

Fig. 9 zeigt eine vergrößerte Darstellung des auch in Fig. 3b gezeigten Führungselements mit der eingesetzten Führungseinrichtung 12. Man erkennt, dass die Führungseinrichtung 12 zwei Eingriffsmittel 11 aufweist, die jeweils in die durch die Halteabschnitte 9a, 9b gebildeten Ausnehmungen eingreifen. Die Kontur dieser Eingriffsmittel 11 ist vorteilhaft für die Stabilität der eingesetzten Führungseinrichtung 12 ausgelegt. Genauer weisen die Eingriffsmittel 11 zwei schräg verlaufenden Seitenabschnitte 11a und 11b und einen in Fig. 9 horizonatal verlaufenden Endabschnitt 11c auf.

Durch den Endabschnitt 11c und den entsprechenden Endabschnitt an dem unteren Eingriffsmittel 11 wird erreicht, dass die Führungseinrichtung das Führungselement 4 in der vertikalen Richtung vollständig ausfüllt und auf diese Weise die Stabilität erhöht wird.

Zwischen den beiden Seitenabschnitten 11a und 11b einerseits und dem Führungselement 4 andererseits werden Ausnehmungen bzw. Freiflächen 17 gebildet. Diese Freiflächen 17 dienen dazu, dass die Führungseinrichtung 12 besser in das geformte bzw. kurvige Führungselement 4 eingeführt werden kann.

Fig. 10 zeigt eine weitere Ausführungsform eines Führungselements 4 mit einer Führungseinrichtung 12. Auch hier weisen die Eingriffsmittel 11 die Seitenabschnitte 11a und 11b sowie den Endabschnitt 11c auf und auch hier werden die Freiflächen 17 zwischen der Führungseinrichtung 12 und dem Führungselement 4 gebildet. Auch ist in Fig. 10 deutlich der Spalt 16 zwischen der Führungseinrichtung 12 und dem Führungselement 4 zu erkennen.

## Patentansprüche

1. Führungsanordnung zum Führen von bewegten Gebinden mit wenigstens einem Führungselement (4), welches sich in einer vorgegebenen Erstreckungsrichtung (E) wenigstens abschnittsweise entlang eines Transportpfades der Gebinde erstreckt und wenigstens einer Halteeinrichtung (10), welche das Führungselement (4) an einer vorbestimmten Position gegenüber dem Transportpfad hält,
wobei
die Halteeinrichtung (10) ein aus zwei Klammerteilen (7a, 7b) gebildetes Klammerelement (6) aufweist, welches das Führungselement (4) klammert, das Klammerelement (6) in einer senkrecht zu der Erstreckungsrichtung (E) stehenden Richtung an dem Führungselement (4) anliegt und das Führungselement (4) in seinem Querschnitt zwei Halteabschnitte (9a, 9b) sowie einen zwischen diesen Halteabschnitten (9a, 9b) und einteilig mit diesen Halteabschnitten (9a, 9b) ausgebildeten Wandabschnitt (8) aufweist, wobei diese Halteabschnitte (9a, 9b) wenigstens um 90° gekrümmt sind und ein Außenumfang der Halteabschnitte (9a, 9b) mit dem Klammerelement (6) wenigstens abschnittsweise in Berührung steht und das Führungselement (4) eine durch den Wandabschnitt (8) und die Halteabschnitte (9a, 9b) gebildete Ausnehmung (18) aufweist, in der eine weitere Führungseinrichtung (12) aufnehmbar ist, und wobei die Halteeinrichtung (10) einen Träger (20) aufweist, an dem das Klammerelement (6) lösbar und fest angeordnet ist, **dadurch gekennzeichnet, dass** ein erstes Eingriffsmittel (26) des Trägers (20) mit einem zweiten Eingriffsmittel (25, 29) wenigstens eines der Klammerteile (7a, 7b) des Klammerelementes (6) zusammenwirkt.

2. Führungsanordnung nach Anspruch 1,
**dadurch gekennzeichnet, dass**
wenigstens ein Halteabschnitt (9a, 9b) symmetrisch bezüglich einer zu dem Wandabschnitt (8) parallelen Ebene steht.

3. Führungsanordnung nach wenigstens einem der vorangegangenen Ansprüche,
**dadurch gekennzeichnet, dass**
das Klammerelement (6) ein C - förmiges Profil aufweist.

4. Führungsanordnung nach wenigstens einem der vorangegangenen Ansprüche,
**dadurch gekennzeichnet, dass**
das Führungselement (4) ein C - förmiges Profil aufweist.

5. Führungsanordnung nach wenigstens einem der vorangegangenen Ansprüche,
**dadurch gekennzeichnet, dass**
das Klammerelement (6) das Führungselement mittels zweier sich gegenüberliegender Befestigungsabschnitte (6a, 6b) klammert, wobei diese Befestigungsabschnitte um einen geringeren Winkel gekrümmt sind als die Halteabschnitte (9a, 9b) des Führungselements.

6. Führungsanordnung nach wenigstens einem der vorangegangenen Ansprüche,
**dadurch gekennzeichnet, dass**
ein Außenprofil des Führungselements (4) an ein Innenprofil des Klammerelements (6) angepasst ist.

7. Führungsanordnung nach wenigstens einem der vorangegangenen Ansprüche,
**dadurch gekennzeichnet, dass**
eine Breite (Y) des Außenumfangs des Führungselements (4) größer ist als eine Breite (X) des Innenumfangs des Klammerelements (6).

8. Führungsanordnung nach wenigstens einem der vorangegangenen Ansprüche,
**dadurch gekennzeichnet, dass**
in der Ausnehmung (18) des Führungselements (4) eine weitere Führungseinrichtung (12) angeordnet ist.

9. Halteeinrichtung (10) zum Halten eines Führungselements (4) zum Führen von bewegten Gebinden, wobei die Halteeinrichtung (10) ein Klammerelement (6) zum Halten des Führungselements (4) und einen Träger (20), an dem dieses Klammerelement (6) angeordnet ist, aufweist,
wobei das Klammerelement (6) einen ersten Klammerteil (7a), einen zweiten mit diesem ersten Klammerteil (7a) zum Halten des Führungselements (4) zusammenwirkenden Klammerteil (7b) und wenigstens ein Verbindungselement (22) aufweist, mittels dem die beiden Klammerteile (7a, 7b) lösbar miteinander verbindbar sind, wobei die Klammerteile (7a, 7b) einen Aufnahmebereich zur Aufnahme eines Endabschnitts des Trägers (20) dergestalt aufweisen, **dadurch gekennzeichnet, dass** der Träger (20) ein erstes Eingriffsmittel (26) aufweist, das mit einem zweiten Eingriffsmittel (25, 29) wenigstens eines Klammerteils (7a, 7b) zusammenwirkt, und dass der Endabschnitt des Trägers (20) zwischen den Klammerteilen (7a, 7b) aufnehmbar und drehfest zwischen den Klammerteilen (7a, 7b) einklemmbar ist.

10. Halteeinrichtung (10) nach Anspruch 9,
**dadurch gekennzeichnet, dass**
an dem Endabschnitt des Trägers (20) ein Eingriffsmittel (26) mit nicht kreisförmigem Querschnitt vorgesehen ist.

11. Halteeinrichtung (10) nach wenigsten einem der vorangegangenen Ansprüche 9 - 10,
**dadurch gekennzeichnet, dass**
ein Klammerteil (7a, 7b) eine Öffnung (38) aufweist, durch die ein Abschnitt des Trägers (20) hindurchführbar ist.

12. Halteeinrichtung (10) nach wenigsten einem der vorangegangenen Ansprüche 9 - 11,
**dadurch gekennzeichnet, dass**
wenigstens ein Klammerteil (7a, 7b) ein Ausnehmung (32) aufweist, deren geometrische Gestalt auf einen Querschnitt eines Stirnabschnitts des Trägers (20) angepasst ist.

13. Führungsanordnung nach wenigstens einem der vorangegangenen Ansprüche 1 -8 mit wenigstens einer Halteeinrichtung nach wenigstens einem der vorangegangenen Ansprüche 9 -12.

## Claims

1. Guide arrangement for guiding moving containers, comprising at least one guide element (4) which extends in a predefined extension direction (E) at least in some sections along the transport path of the containers, and at least one holding device (10) which holds the guide element (4) at a predetermined position relative to the transport path, wherein the holding device (10) has a clamp element (6) formed by two clam parts (7a, 7b) which clamps the guide element (4), the clamp element (6) bears against the guide element (4) in a direction perpendicular to the extension direction (E), and the guide element (4) has in its cross-section two holding sections (9a, 9b) and a wall section (8) which is formed between these holding sections (9a, 9b) and in one piece with these holding sections (9a, 9b), wherein these holding sections (9a, 9b) are curved at least by 90° and an outer circumference of the holding sections (9a, 9b) is in contact with the clamp element (6) at least in some sections, and the guide element (4) has a recess (18) which is formed by the wall section (8) and the holding sections (9a, 9b) and in which a further guide device (12) can be received and wherein the holding device comprises a carrier at which the clamp element (6) is arranged fixedly and releasably, **characterised in that** a first engagement means (26) of the carrier (20) cooperates with a second engagement means (25, 29) of at least one of the clamp parts (7a, 7b) of the clamp element (6).

2. Guide arrangement according to claim 1, **characterised in that** at least one holding section (9a, 9b) is symmetrical in relation to a plane parallel to the wall section (8).

3. Guide arrangement according to at least one of the preceding claims, **characterised in that** the clamp element (6) has a C-shaped profile.

4. Guide arrangement according to at least one of the preceding claims, **characterised in that** the guide element (4) has a C-shaped profile.

5. Guide arrangement according to at least one of the preceding claims, **characterised in that** the clamp element (6) clamps the guide element by means of two fixing sections (6a, 6b) located opposite one another, wherein these fixing sections are curved by a smaller angle than the holding sections (9a, 9b) of the guide element.

6. Guide arrangement according to at least one of the preceding claims, **characterised in that** an outer profile of the guide element (4) is adapted to an inner profile of the clamp element (6).

7. Guide arrangement according to at least one of the preceding claims, **characterised in that** a width (Y) of the outer circumference of the guide element (4) is larger than a width (X) of the inner circumference of the clamp element (6).

8. Guide arrangement according to at least one of the preceding claims, **characterised in that** a further guide device (12) is arranged in the recess (18) of the guide element (4).

9. Holding device (10) for holding a guide element (4) for guiding moving containers, wherein the holding device (10) comprises a clamp element (6) for holding the guide element (4) and a carrier (20) on which this clamp element (6) is arranged, wherein the clamp element (6) comprises a first clamp part (7a), a second clamp part (7b) which cooperates with this first clamp part (7a) in order to hold the guide element (4), and at least one connection element (22), by means of which the two clamp parts (7a, 7b) can be releasably connected to one another, **characterised in that** the carrier comprises a first engagement means (26), which cooperates with a second engagement means (25, 29) of at least one clamp part (7a, 7b), wherein the clamp parts (7a, 7b) have a receiving region for receiving an end section of the carrier (20) and in such a way that the end section of the carrier (20) can be received between the clamp parts (7a, 7b) and clamped between the clamp parts (7a, 7b) in a non-rotatable manner.

10. Holding device (10) according to claim 13, **characterised in that** an engagement body (26) with a non-circular cross-section is provided on an end section of the carrier (20).

11. Holding device (10) according to at least one of the preceding claims 12 - 14, **characterised in that** one clamp part (7a, 7b) has an opening (38), through which a section of the carrier (20) can pass.

12. Holding device (10) according to at least one of the preceding claims 12 - 15, **characterised in that** at least one clamp part (7a, 7b) has a recess (32), the geometric shape of which is adapted to a cross-section of an end section of the carrier (20).

13. Guide arrangement according to at least one of the preceding claims 1 - 8 comprising at least one holding device according to at least one of the preceding claims 9 - 12.

## Revendications

1. Système de guidage, pour le guidage de récipients en mouvement, comportant au moins un élément de guidage (4) qui s'étend au moins partiellement le long du chemin de transport des récipients dans une direction d'extension (E) définie, et au moins un dispositif de maintien (10) qui maintien l'élément de guidage (4) à un emplacement défini relativement au chemin de transport,
le dispositif de maintien (10) comportant un élément de serrage (6) constitué de deux pièces de serrage (7a, 7b) et qui enserre l'élément de guidage (4), l'élément de serrage (6) reposant contre l'élément de guidage (4) dans une direction perpendiculaire à la direction d'extension (E) et l'élément de guidage (4) présentant dans sa section transversale deux segments de maintien (9a, 9b) ainsi qu'un segment de paroi (8) prévu entre les segments de maintien (9a, 9b) et réalisé d'une seule pièce avec ces segments de maintien (9a, 9b), lesdits segments de maintien (9a, 9b) étant incurvés d'au moins 90° et un contour extérieur des segments de maintien (9a, 9b) étant au moins partiellement en contact avec l'élément de serrage (6), l'élément de guidage (4) comportant un évidement (18) formé par le segment de paroi (8) et les segments de maintien (9a, 9b), lequel peut recevoir un autre dispositif de guidage (12), et le dispositif de maintien comportant un support (20) préférentiellement réalisé en forme de barre, contre lequel l'élément de serrage (6) est disposé de manière fixe et amovible,
**caractérisé**
**en ce qu'**un premier moyen d'engrènement (26) du support (20) coopère avec un deuxième moyen d'engrènement (25, 29) d'au moins une des pièces de serrage (7a, 7b) de l'élément de serrage (6).

2. Système de guidage, selon la revendication 1,
**caractérisé**
**en ce qu'**au moins un segment de maintien (9a, 9b) est réalisé symétriquement par rapport à un plan parallèle au segment de paroi (8).

3. Système de guidage selon au moins une des revendications précédentes,
**caractérisé**
**en ce que** l'élément de serrage (6) présente un profil en forme de C.

4. Système de guidage selon au moins une des revendications précédentes,
**caractérisé**
**en ce que** l'élément de guidage (4) présente un profil en forme de C.

5. Système de guidage selon au moins une des revendications précédentes,
**caractérisé**
**en ce que** l'élément de serrage (6) enserre l'élément de guidage au moyen de deux segments de fixation (6a, 6b) en vis-à-vis, lesdits segments de fixation étant incurvés suivant un angle inférieur aux segments de maintien (9a, 9b) de l'élément de guidage.

6. Système de guidage selon au moins une des revendications précédentes,
**caractérisé**
**en ce qu'**un profil extérieur de l'élément de guidage (4) est ajusté à un profil intérieur de l'élément de serrage (6).

7. Système de guidage selon au moins une des revendications précédentes,
**caractérisé**
**en ce qu'**une largeur (Y) du contour extérieur de l'élément de guidage (4) est supérieure à une largeur (X) du contour intérieur de l'élément de serrage (6).

8. Système de guidage selon au moins une des revendications précédentes,
**caractérisé**
**en ce qu'**un autre dispositif de guidage (12) est disposé dans l'évidement (18) de l'élément de guidage (4).

9. Dispositif de maintien (10) pour le maintien d'un élément de guidage (4) pour le guidage de récipients en mouvement, ledit dispositif de maintien (10) comportant un élément de serrage (6) pour le maintien de l'élément de guidage (4), et un support (20) contre lequel est disposé ledit élément de serrage (6),
l'élément de serrage comportant une première pièce de serrage (7a), une deuxième pièce de serrage (7b) coopérant avec ladite première pièce de serrage (7a) pour le maintien de l'élément de guidage (4), et au moins un élément de connexion (22) au moyen duquel les deux pièces de serrage (7a, 7b) peuvent être raccordées l'une à l'autre de manière amovible,
**caractérisé**
**en ce que** le support (20) comporte un premier moyen d'engrènement (26) qui coopère avec un deuxième moyen d'engrènement (25, 29) d'au moins une des pièces de serrage (7a, 7b), lesdites pièce de serrage (7a, 7b) présentant une zone de réception pour le logement d'une partie d'extrémité du support (20) en ce que la partie d'extrémité du support (20) peut être logée entre les pièces de serrage (7a, 7b) et être enserré de manière solidaire en rotation entre lesdites pièces de serrage (7a, 7b).

10. Dispositif de maintien (10) selon la revendication 9,
**caractérisé**
**en ce qu'**un moyen d'engrènement (26) est prévu avec une section transversale non circulaire sur la partie d'extrémité du support (20).

11. Dispositif de maintien (10) selon au moins une des revendications 9 à 10,
**caractérisé**
**en ce qu'**une pièce de serrage (7a, 7b) comporte une ouverture (38) par laquelle une partie du support (20) est insérable.

12. Dispositif de maintien (10) selon au moins une des revendications 9 à 11,
**caractérisé en ce qu'**au moins une pièce de serrage (7a, 7b) comporte un évidement (32) dont la forme géométrique est ajustée à une section transversale d'une partie frontale du support (20).

13. Système de guidage selon au moins une des revendications 1 à 8, comportant au moins un dispositif de maintien selon au moins une des revendications 9 à 12.
